(19) Europäisches Patentamt / European Patent Office / Office européen des brevets

(11) **EP 4 173 727 B1**

(12) **EUROPEAN PATENT SPECIFICATION**

(45) Date of publication and mention
of the grant of the patent:
**04.03.2026 Bulletin 2026/10**

(21) Application number: **21828035.2**

(22) Date of filing: **21.06.2021**

(51) International Patent Classification (IPC):
**B05D 3/00** (2006.01)    **B05D 3/12** (2006.01)
**B05D 7/24** (2006.01)    **B32B 27/30** (2006.01)
**C09D 127/12** (2006.01)    **C09D 127/16** (2006.01)
**C09D 127/18** (2006.01)    **C09D 201/04** (2006.01)
**C09D 7/63** (2018.01)

(52) Cooperative Patent Classification (CPC):
(C-Sets available)
**C09D 7/20; B05D 3/0218; B05D 3/0272;**
**C08F 2/38; C08F 214/265; C08F 218/08;**
**C08J 3/247; C08J 3/28; C08J 7/0427; C08J 7/046;**
**C09D 127/18;** B05D 3/0493; B05D 5/12; B05D 7/02;
B05D 7/04;           (Cont.)

(86) International application number:
**PCT/JP2021/023430**

(87) International publication number:
**WO 2021/261450 (30.12.2021 Gazette 2021/52)**

(54) **PAINT AND METHOD FOR PRODUCING PAINT, AND PAINTED ARTICLE AND METHOD FOR PRODUCING PAINTED ARTICLE**

FARBE UND VERFAHREN ZUR HERSTELLUNG VON FARBE SOWIE LACKIERTER ARTIKEL UND VERFAHREN ZUR HERSTELLUNG EINES LACKIERTEN ARTIKELS

PEINTURE ET PROCÉDÉ DE PRODUCTION DE PEINTURE, ARTICLE PEINT ET PROCÉDÉ DE PRODUCTION D'ARTICLE PEINT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2020 JP 2020109439**
         **09.10.2020 JP 2020171178**
         **11.11.2020 JP 2020188253**

(43) Date of publication of application:
**03.05.2023 Bulletin 2023/18**

(73) Proprietor: **AGC INC.**
**Chiyoda-ku,**
**Tokyo 1008405 (JP)**

(72) Inventors:
• **ABE, Masatoshi**
**Tokyo 100-8405 (JP)**
• **TOYODA, Mizuna**
**Tokyo 100-8405 (JP)**
• **KAWAI, Tsuyoshi**
**Tokyo 100-8405 (JP)**
• **BEPPU, Shotaro**
**Tokyo 100-8405 (JP)**

(74) Representative: **Müller-Boré & Partner**
**Patentanwälte PartG mbB**
**Friedenheimer Brücke 21**
**80639 München (DE)**

(56) References cited:
EP-A1- 1 093 485     EP-B1- 1 093 485
WO-A1-2019/126016   WO-A1-2019/239288
JP-A- 2002 012 813    JP-A- 2002 256 204
JP-A- S53 125 491     JP-A- S63 304 009

(52) Cooperative Patent Classification (CPC): (Cont.)
B05D 2201/02; B05D 2202/10; B05D 2202/15;
B05D 2202/25; B05D 2203/35; B05D 2401/10;
B05D 2506/10; C08J 2309/02; C08J 2323/22;
C08J 2327/12; C08J 2363/00; C08J 2371/00;
C08J 2379/08; C08J 2427/18; C08K 2201/019

C-Sets
**C08F 214/265, C08F 210/06;**
**C08F 214/265, C08F 210/06, C08F 216/125;**
**C08F 218/08, C08F 210/02, C08F 218/04;**
**C09D 127/18, C08K 5/14**

**Description**

Technical Field

The present invention relates to a coating material and a method for producing a coating material, and a coated article and a method for producing a coated article.

Background Art

Fluorine-containing polymers are used in various fields since having excellent heat resistance, chemical resistance, oil resistance, weather resistance, electric insulability, and the like.

The fluorine-containing polymer may be used as a coating material by dispersing or dissolving the polymer in a solvent. For example, PLT1 discloses a coating material comprising: a fluorine-containing polymer having a unit based on tetrafluoroethylene and a unit based on propylene; a silane coupling agent; and a solvent. PLT2 describes fluorinated polymer coating compositions and articles therefrom. PLT 3 describes solvents for amorphous fluoropolymers. PLT 4 describes fluorinated elastomers cured by actinic radiation and methods thereof. PLT 5 describes a fluorine rubber coating material composition. PLT 6 describes an ultraviolet-cross-linkable coating composition of fluorine-containing polymer and coated article.

Citation List

Patent Literature

PLT1: JP 07-34026 A
PLT2: WO 2019/239288 A1
PLT3: EP 1 093 485 A1
PLT4: WO 2019/126016 A1
PLT5: JP 2002-012813 A
PLT6: JP 2002-256204 A

Summary of Invention

Technical Problem

In recent years, a coated article formed by using the coating material in which the fluorine-containing polymer is dispersed or dissolved in a solvent has been required to have improved performance in each field. Specifically, a coated article having a coat with sufficient hardness has been required. In response to such a requirement, the present inventors have evaluated a coat of a coated article formed by using the coating material as described in PLT1, and found that its hardness has a room for improvement.

The present invention is made in view of the above problem. An object of the present invention is to provide a coating material capable of forming a coat having excellent hardness, a method for producing a coating material, and a coated article and a method for producing a coated article.

Solution to Problem

The present inventors have intensively investigated the above problem, and consequently found that a desired effect can be obtained by using a coating material, comprising: a fluorine-containing polymer having at least one of an iodine atom and a bromine atom; and a solvent, wherein a storage elastic modulus G' of the fluorine-containing polymer is less than 360 kPa, and a total light transmittance of a mixed liquid obtained by mixing and stirring the fluorine-containing polymer and the solvent is 1.0% or more, the mixed liquid being left to stand for 3 days, stirred again, and left to stand for 30 minutes to measure the total light transmittance. This finding has led to the completion of the present invention.

That is, the inventors have found that the constitution defined in the appended claims can solve the above problem.

Advantageous Effects of Invention

The present invention can provide a coating material capable of forming a coat having excellent hardness and a method for producing a coating material, and a coated article and a method for producing a coated article. Forming a coat on a glass fiber by using the coating material of the present invention can form a coat-formed glass fiber having high volume resistivity and excellent insulability, or a texture, knit, braiding, or non-woven fabric of the glass fiber.

Description of Embodiments

Terms in the present invention mean as follows.

A numerical range represented by using "to" means a range including numbers described before and after "to" as a lower limit and an upper limit.

A term "unit" is a generic name including: an atomic group directly formed by polymerizing a monomer and derived from one molecule of the monomer; and an atomic group obtained by chemically converting a part of the above atomic group. A term "unit based on a monomer" is also referred to as "unit", hereinafter.

A term "rubber" means a rubber exhibiting properties defined in accordance with JIS K 6200:2008, which is distinguished from "resin".

A term "solidified coat" is referred to a coat obtained by applying a coating material on a substrate and removing a solvent in the coating material by drying.

A term "cured coat" is referred to a coat obtained by applying a coating material on a substrate and crosslinking a fluorine-containing polymer in the coating material.

A term "boiling point" is a value measured under the atmospheric pressure.

[Coating material]

A coating material of the present invention (hereinafter, also referred to as "the present coating material") comprises: a fluorine-containing polymer having at least one of an iodine atom and a bromine atom (hereinafter, also referred to as "the specific fluorine-containing polymer"); and a solvent.

A storage elastic modulus G' of the fluorine-containing polymer is 200 kPa or more and less than 360 kPa, and a total light transmittance of a mixed liquid obtained by mixing and stirring the fluorine-containing polymer and the solvent is 1.0% or more, the mixed liquid being left to stand for 3 days, stirred again, and left to stand for 30 minutes to measure the total light transmittance. A weight-average molecular weight (Mw) of the fluorine-containing polymer is 240,000 to 280,000. The solvent is a non-fluorine-based organic solvent. A content of the solvent is 30 mass% or more and 98 mass% or less, relative to the total mass of the present coating material

The present coating material can form a coat having excellent hardness.

A reason why the coat having excellent hardness is obtained by using the present coating material is considered to be the use of the fluorine-containing polymer having the small storage elastic modulus G'.

The storage elastic modulus G' correlates to a molecular weight of the fluorine-containing polymer. A low storage elastic modulus G' indicates a low molecular weight of the fluorine-containing polymer. That is, it can be mentioned that a low storage elastic modulus G' indicates the fluorine-containing polymer being easily soluble in the solvent.

If a coating material in which the fluorine-containing polymer is insufficiently dissolved in the solvent is coated on a substrate, air bubbles may be mixed. In the present coating material, the fluorine-containing polymer is sufficiently dissolved in the solvent, and thereby the mixing of air bubbles during the coating of the present coating material is considered to be inhibited.

If a solidified coat is produced by coating a coating material in which the fluorine-containing polymer is insufficiently dissolved in the solvent on a substrate and drying the coating material, drying of a solvent present around the undissolved fluorine-containing polymer is slowed to generate air bubbles in the solidified coat in some cases. If the solvent remains in the solidified coat and a cured coat is produced by crosslinking the fluorine-containing polymer in the solidified coat with heating, the solvent volatilizes during the crosslinking to generate air bubbles in the cured coat in some cases. In the present coating material, the fluorine-containing polymer is sufficiently dissolved in the solvent, and thereby it is considered that the solvent easily volatilizes in a step of producing the solidified coat, the air bubble generation can be inhibited during the production of the solidified coat, and the air bubble generation can be inhibited also during the production of the cured coat.

Here, the present inventors have found that, if air bubbles are present in the coat obtained from the present coating material, a load is applied at the air bubble position by applying a force from the outside to the coat, which causes a decrease in hardness. It is presumed that the fluorine-containing polymer comprised in the present coating material can inhibit the mixing and generating air bubbles in the coat as above even having a softness property of a storage elastic modulus G' of less than 360 kPa, and thereby the coat having excellent hardness can be formed.

In the present coating material, the fluorine-containing polymer is sufficiently dissolved in the solvent, and thereby it is considered that mottling on the coat occurring due to an insufficiently dissolved fluorine-containing polymer can be inhibited.

The total light transmittance of a mixed liquid obtained by mixing and stirring the fluorine-containing polymer comprised in the present coating material and the solvent is 1.0% or more, the mixed liquid being left to stand for 3 days, stirred again, and left to stand for 30 minutes to measure the total light transmittance is considered to indicate that the fluorine-containing polymer in the present coating material is sufficiently dissolved or favorably dispersed in the solvent.

Another reason why the hardness of the cured coat is improved is considered that the fluorine-containing polymer has at least one of an iodine atom and a bromine atom. The iodine atom and the bromine atom become a crosslinking position when the fluorine-containing polymer is crosslinked. It is considered that the fluorine-containing polymer having at least one of the iodine atom and the bromine atom increases a crosslinking rate of the fluorine-containing polymer, and thereby the curing proceeds before air bubble generation are able to form the cured coat with inhibited air bubble generation. It is presumed that the cured coat having excellent hardness can be consequently formed.

Since having few air bubbles, the coat obtained from the present coating material also has excellent adhesiveness to a substrate and excellent impact resistance.

Since the coat obtained from the present coating material has few air bubbles and excellent adhesiveness to a substrate, using the present coating material can form a coat-formed glass fiber having high volume resistivity and excellent insulability, or a texture, knit, braiding, or non-woven fabric of the glass fiber.

<Physical Properties of Coating Material>

The total light transmittance of a mixed liquid obtained by mixing and stirring the specific fluorine-containing polymer and the solvent comprised in the present coating material is 1.0% or more, the mixed liquid being left to stand for 3 days after the mixing and stirring, stirred again, and left to stand for 30 minutes to measure the total light transmittance.

A temperature when the mixed liquid is left to stand is preferably lower than a boiling point of the used solvent because the mixed liquid is not deteriorated and the solvent hardly volatilizes. The mixed liquid may be left to stand at a room temperature (approximately 15 to 30°C). Within the above temperature range, the specific fluorine-containing polymer can be sufficiently dissolved in the solvent.

The total light transmittance is preferably 2% or more, more preferably 3% or more, and particularly preferably 4% or more, in terms of further excellent hardness of the coat. An upper limit of the total light transmittance is 100%.

The total light transmittance is a value measured in accordance with JIS K 7105.

The total light transmittance can be regulated with, for example, a type and content of the solvent.

<Specific Fluorine-Containing Polymer >

The specific fluorine-containing polymer has a fluorine atom and at least one of an iodine atom and a bromine atom, and is a polymer exhibiting properties of rubber by crosslinking.

Here, the iodine atom and the bromine atom become a crosslinking position when the fluorine-containing polymer is crosslinked.

The specific fluorine-containing polymer preferably has a unit based on tetrafluoroethylene (hereinafter, also referred to as "TFE") and a unit based on propylene, in terms of further excellent effect of the present invention.

When the specific fluorine-containing polymer has the TFE unit and the propylene unit, the specific fluorine-containing polymer may further has a unit based on a monomer having two or more polymerizable unsaturated bonds (hereinafter, also referred to as "DV").

The DV unit is a unit based on a monomer having two or more polymerizable unsaturated bonds.

Specific examples of the polymerizable unsaturated bond include a double bond of carbon atom-carbon atom (C=C) and a triple bond of carbon atom-carbon atom (C≡C).

A number of the polymerizable unsaturated bonds in the DV is preferably 2 to 6, more preferably 2 or 3, and particularly preferably 2, in terms of further excellent polymerization reactivity.

The DV preferably further has a fluorine atom.

The DV is preferably a monomer represented by the following formula (1)

$$(CR^{11}R^{12}=CR^{13})_{a1}R^{14} \qquad (1)$$

In the formula (1), $R^{11}$, $R^{12}$, and $R^{13}$ each independently represents a hydrogen atom, a fluorine atom, a methyl group, or a trifluoromethyl group. "a1" represents an integer of 2 to 6. $R^{14}$ represents: an a1-valent perfluorohydrocarbon group having 1 to 10 carbon atoms; or a group in which the perfluorohydrocarbon group has an ethereal oxygen atom at the terminal or between a carbon-carbon bond. Each of a plurality of $R^{11}$, a plurality of $R^{12}$, and a plurality of $R^{13}$ may be same

as or different from each other, and is particularly preferably same as each other.

"a1" is preferably 2 or 3, and particularly preferably 2.

Each of $R^{11}$, $R^{12}$, and $R^{13}$ is preferably a fluorine atom or a hydrogen atom, and all of $R^{11}$, $R^{12}$, and $R^{13}$ are more preferably fluorine atoms or hydrogen atoms in terms of further excellent polymerization reactivity of the DV. All of the $R^{11}$, $R^{12}$, and $R^{13}$ are particularly preferably fluorine atoms in terms of heat resistance and chemical resistance of the coated article.

$R^{14}$ may be any of a linear-chain, branched-chain, and cyclic groups. $R^{14}$ is preferably a linear-chain or branched-chain group, and particularly preferably a linear-chain group. A number of carbon atoms of $R^{14}$ is preferably 2 to 10, more preferably 3 to 8, further preferably 3 to 6, and particularly preferably 3 to 5.

$R^{14}$ may have or may not have an ethereal oxygen atom, but preferably has an ethereal oxygen atom in terms of further excellent crosslinking reactivity and rubber physical properties.

A number of ethereal oxygen atoms of $R^{14}$ is preferably 1 to 6, more preferably 1 to 3, and particularly preferably 1 or 2. The ethereal oxygen atom in $R^{14}$ is preferably present at the terminal of $R^{14}$.

Among the monomers represented by the formula (1), specific examples of preferable monomers include monomers represented by the formula (2) and monomers represented by the formula (3).

$$(CF_2=CF)_2R^{21} \qquad (2)$$

In the formula (2), $R^{21}$ represents a divalent perfluoroalkylene group having 2 to 10 carbon atoms, or a group in which the perfluoroalkylene group has an ethereal oxygen atom at the terminal or between a carbon-carbon bond thereof.

Specific examples of the monomers represented by the formula (2) include $CF_2=CFO(CF_2)_2OCF=CF_2$, $CF_2=CFO(CF_2)_3OCF=CF_2$, $CF_2=CFO(CF_2)_4OCF=CF_2$, $CF_2=CFO(CF_2)_6OCF=CF_2$, $CF_2=CFO(CF_2)_8OCF=CF_2$, $CF_2=CFO(CF_2)_2OCF(CF_3)CF_2OCF=CF_2$, $CF_2=CFO(CF_2)_2O(CF(CF_3)CF_2O)_2CF=CF_2$, $CF_2=CFOCF_2O(CF_2CF_2O)CF=CF_2$, $CF_2=CFO(CF_2O)_3O(CF(CF_3)CF_2O)_2CF=CF_2$, $CF_2=CFOCF_2CF(CF_3)O(CF_2)_2OCF(CF_3)CF_2OCF=CF_2$, and $CF_2=CFOCF_2CF_2O(CF_2O)_2CF_2CF_2OCF=CF_2$.

Among the monomers represented by the formula (2), specific examples of more preferable monomers include $CF_2=CFO(CF_2)_3OCF=CF_2$ (hereinafter, also referred to as "C3DVE") and $CF_2=CFO(CF_2)_4OCF=CF_2$ (hereinafter, also referred to as "C4DVE" or "PBDVE").

$$(CH_2=CH)_2R^{31} \qquad (3)$$

In the formula (3), $R^{31}$ represents a divalent perfluoroalkylene group having 2 to 10 carbon atoms, or a group in which the perfluoroalkylene group has an ethereal oxygen atom at the terminal or between a carbon-carbon bond.

Specific examples of the monomers represented by the formula (3) include $CH_2=CH(CF_2)_2CH=CH_2$, $CH_2=CH(CF_2)_4CH=CH_2$, and $CH_2=CH(CF_2)_6CH=CH_2$.

Among the monomers represented by formula (3), specific examples of more preferable monomers include $CH_2=CH(CF_2)_6CH=CH_2$ (hereinafter, also referred to as "C6DV").

Copolymerizing the DV allows the polymerizable double bond at the terminal of the DV to react during the polymerization, resulting in the specific fluorine-containing polymer having a branched chain.

The specific fluorine-containing polymer may have a unit based on a monomer other than the above (hereinafter, also referred to as "other monomer"). Specific examples of the other monomer include vinylidene fluoride (hereinafter, also referred to as "VdF"), hexafluoropropylene (hereinafter, also referred to as "HFP"), chlorotrifluoroethylene (hereinafter, also referred to as "CTFE"), a unit based on a perfluoro(alkyl vinyl ether) (hereinafter, also referred to as "PAVE"), a monomer represented by the following formula (5), and ethylene. Examples thereof also include a monomer other than the above and a unit having a halogen atom (hereinafter, also referred to as "monomer having another halogen atom").

The specific fluorine-containing polymer may have the VdF unit, but preferably has substantially no VdF unit in terms of the coated article having excellent chemical resistance (specifically, amine resistance).

Here, "having substantially no VdF unit" is referred to a content of the VdF unit being 0.1 mol% or less relative to all the unit of the specific fluorine-containing polymer.

The PAVE unit is a unit based on a perfluoro(alkyl vinyl ether).

The PAVE is preferably a monomer represented by the formula (4) in terms of excellent polymerization reactivity and rubber physical properties.

$$CF_2=CF-O-R^{f4} \qquad (4)$$

In the formula (4), $R^{f4}$ represents a perfluoroalkyl group having 1 to 10 carbon atoms. A number of carbon atoms of $R^{f4}$ is preferably 1 to 8, more preferably 1 to 6, further preferably 1 to 5, and particularly preferably 1 to 3, in terms of further excellent polymerization reactivity.

The perfluoroalkyl group may be a linear chain, and may be a branched chain.

Specific examples of the PAVE include perfluoro(methyl vinyl ether) (hereinafter, also referred to as "PMVE"), perfluoro(ethyl vinyl ether) (hereinafter, also referred to as "PEVE"), and perfluoro(propyl vinyl ether) (hereinafter, also referred to as "PPVE"). Among them, PMVE and PPVE are preferable.

The formula (5) is as follows.

$$CF_2=CF-O-R^{f5} \qquad (5)$$

In the formula (5), $R^{f5}$ represents a perfluoroalkyl group having 1 to 5 ethereal oxygen atoms and 1 to 8 carbon atoms. A number of carbon atoms of $R^{f5}$ is preferably 1 to 6, and particularly preferably 1 to 5.

Specific examples of the monomers represented by the formula (5) include perfluoro(3,6-dioxa-1-heptene), perfluoro(3,6-dioxa-1-octene), and perfluoro(5-methyl-3,6-dioxa-1-nonene).

As the monomer having another halogen atom, monomers having at least one of an iodine atom and a bromine atom are preferable. Specific examples of such monomers include $CF_2=CFBr$, $CH_2=CHCF_2CF_2Br$, $CF_2=CF-O-CF_2CF_2-I$, $CF_2=CF-O-CF_2CF_2-Br$, $CF_2=CF-O-CF_2CF_2CH_2-I$, $CF_2=CF-O-CF_2CF_2CH_2-Br$, $CF_2=CF-O-CF_2CF_2(CF_3)-O-CF_2CF_2CH_2-I$, and $CF_2=CF-O-CF_2CF_2(CF_3)-O-CF_2CF_2CH_2-Br$.

When the specific fluorine-containing polymer has the TFE unit, a content thereof is preferably 30 to 70 mol%, and particularly preferably 40 to 60 mol%, relative to all the unit of the specific fluorine-containing polymer.

When the specific fluorine-containing polymer has the propylene unit, a content thereof is preferably 30 to 70 mol%, and particularly preferably 40 to 60 mol%, relative to all the unit of the specific fluorine-containing polymer.

When the specific fluorine-containing polymer has the DV unit, a content thereof is preferably 0.01 to 2 mol%, more preferably 0.03 to 0.5 mol%, further preferably 0.05 to 0.4 mol%, and particularly preferably 0.1 to 0.3 mol%, relative to all the unit of the specific fluorine-containing polymer.

When the specific fluorine-containing polymer has the other monomer unit, a content thereof is preferably 0.01 to 10 mol%, and particularly preferably 0.05 to 5 mol%, relative to all the unit of the specific fluorine-containing polymer.

Preferable combinations of each unit contained in the specific fluorine-containing polymer are described below.

Combination 1: a combination of the TFE unit and the propylene unit.
Combination 2: a combination of the TFE unit, the propylene unit, and the DV unit.

The copolymerization composition in the combinations 1 to 2 is preferably the following molar ratio. With the following molar ratio, the crosslinking reactivity of the copolymer becomes further excellent, and in addition, mechanical properties, heat resistance, chemical resistance, oil resistance, and weather resistance of the coated article become excellent.

Combination 1: TFE unit / propylene unit = 40 to 60 / 40 to 60 (molar ratio)
Combination 2: TFE unit / propylene unit / DV unit = 38 to 60 / 38 to 60 / 0.01 to 2 (molar ratio)

The specific fluorine-containing polymer has at least one of an iodine atom and a bromine atom.

Examples of the iodine atom or the bromine atom that the specific fluorine-containing polymer has include: an iodine atom or bromine atom derived from a chain transfer agent having at least one of an iodine atom and a bromine atom, described later; and an iodine atom or a bromine atom in the unit based on the monomer having at least one of the iodine atom and the bromine atom. Among them, preferable is the iodine atom or bromine atom derived from the chain transfer agent having at least one of an iodine atom and a bromine atom, described later.

When the chain transfer agent is used, at least one of the iodine atom and the bromine atom can be introduced at the terminal of the specific fluorine-containing polymer (polymer chain).

When the monomer having at least one of the iodine atom and the bromine atom is used, at least one of the iodine atom and the bromine atom can be introduced at the side chain of the specific fluorine-containing polymer.

The specific fluorine-containing polymer preferably has an iodine atom among the iodine atom and the bromine atom in terms of crosslinking reactivity of the specific fluorine-containing polymer.

A total content of the iodine atom and the bromine atom is preferably 0.01 to 5.0 mass%, more preferably 0.05 to 2.0 mass%, and particularly preferably 0.1 to 1.0 mass%, relative to a total mass of the specific fluorine-containing polymer. The total content within the above range improves the crosslinking reactivity of the specific fluorine-containing polymer to yield excellent mechanical characteristics of the coated article.

When only one of the iodine atom and the bromine atom is contained, the total content of the iodine atom and the bromine atom means the content of the one of the iodine atom and the bromine atom. When both thereof are contained, the total content thereof means a total content of each of the atoms.

The specific fluorine-containing polymer may be used alone, and may be used in combination of two or more thereof.

A content of the specific fluorine-containing polymer is preferably 1 to 80 mass%, more preferably 5 to 70 mass%, and particularly preferably 8 to 65 mass%, relative to the total mass of the present coating material. When the content of the specific fluorine-containing polymer is within the above range, the total light transmittance of a mixed liquid obtained by mixing and stirring the fluorine-containing polymer and the solvent comprised in the present coating material, the mixed liquid being left to stand for 3 days, stirred again, and left to stand for 30 minutes to measure the total light transmittance, is easily regulated. That is, when the coat is formed by using the present coating material, mixing and generating air bubbles in the coat and mottling on the coat are easily inhibited.

A mass ratio of the fluorine-containing polymer to the solvent in the mixed liquid is same as a mass ratio of the fluorine-containing polymer to the solvent in the present coating material.

(Physical Properties of Specific Fluorine-Containing Polymer)

The storage elastic modulus G' of the specific fluorine-containing polymer is 200 kPa or more and less than 360 kPa.

The storage elastic modulus G' of the specific fluorine-containing polymer is preferably 300 kPa or less, particularly preferably 250 kPa or less, and most preferably 230 kPa or less, in terms of further excellent hardness of the coat. The storage elastic modulus G' of the specific fluorine-containing polymer is 200 kPa or more, in terms of formability of the coat having excellent hardness.

Here, the storage elastic modulus G' is an indicator of a weight-average molecular weight of the specific fluorine-containing polymer. A larger value of the storage elastic modulus G' indicates a larger weight-average molecular weight, and a smaller value of the storage elastic modulus G' indicates a smaller weight-average molecular weight. The storage elastic modulus G' of the fluorine-containing polymer in the present invention is a value measured in accordance with ASTM D5289 and ASTM D6204. Detailed measurement conditions are described as in Example.

When the specific fluorine-containing polymer having the TFE unit and the propylene unit and the specific fluorine polymer having the TFE unit, the propylene unit, and the DV unit have a storage elastic modulus G' of 200 to 300 kPa, weight-average molecular weights thereof are estimated to be corresponded to 250,000 to 350,000.

A method for regulating the storage elastic modulus G' of the specific fluorine-containing polymer is not particularly limited, and examples thereof include a method of regulating a polymerization temperature during the production of the specific fluorine-containing polymer, regulating a preparation amount of the chain transfer agent, and the like.

The weight-average molecular weight (Mw) of the specific fluorine-containing polymer is 240,000 to 280,000. When the Mw of the specific fluorine-containing polymer is within the above range, the effect of the present invention becomes more excellent.

The Mw of the fluorine-containing polymer in the present invention is a value measured by gel permeation chromatography using polymethyl methacrylate as a standard substance. Detailed measurement conditions are described as in Example.

An SP value of the specific fluorine-containing polymer is preferably 13 to 25 $(J/cm^3)^{1/2}$, more preferably 15 to 23 $(J/cm^3)^{1/2}$, and particularly preferably 17 to 20 $(J/cm^3)^{1/2}$.

In the present invention, the SP value means a solubility parameter, and can be calculated by the Fedros method (see Literature: R. F. Fedros, Polym. Eng. Sci., 14 [2] 147 (1974)).

A crosslinking rate of the specific fluorine-containing polymer is preferably 10 or more, more preferably 15 or more, and particularly preferably 18 or more, in terms of rapidly proceeding the crosslink reaction and further inhibiting air bubble generation in the coat.

The crosslinking rate of the specific fluorine-containing polymer is preferably 40 or less, more preferably 35 or less, and particularly preferably 25 or less, in terms of proceeding the crosslink reaction at not exceedingly high rate and further inhibiting air bubble generation in the coat.

A unit of the crosslinking rate is "1/min".

Here, the crosslinking rate of the specific fluorine-containing polymer in the present invention is a value calculated by the following formula (A). As this value is larger, it can be mentioned that the specific fluorine-containing polymer is more rapidly crosslinked.

$$\text{Crosslinking Rate (1/min)} = 100 \times [1/(T_{90}\text{-}T_{10})] \quad \text{(A)}$$

In the formula (A), $T_{10}$ means a time (unit: minute) required for a torque of a composition A to reach 10% of a maximum torque, and $T_{90}$ means a time (unit: minute) required for the torque of the composition A to reach 90% of the maximum torque. The times are in a crosslinking test at 160°C for 12 minutes using a crosslinking characteristics tester (product name "RPA2000", manufactured by Alpha Technologies), and from the beginning of the test as the base point. Here, the composition A means a composition obtained by removing the solvent from the present coating material.

A glass transition temperature of the specific fluorine-containing polymer is preferably -50 to 100°C, more preferably -40 to 20°C, and more preferably -30 to 10°C, in terms of flexibility and strength at low temperatures.

The glass transition temperature (Tg) herein is a temperature at an inflection point in a DSC curve obtained by using DSC Q-100, manufactured by TA Instruments, and measured under conditions of heating at a heating rate of 10 °C/min to 135°C, cooling at a cooling rate of 20°C/min, and heating again at a heating rate of 10 °C/min to 135°C.

(Method for Producing Specific Fluorine-Containing Polymer)

An example of a method for producing the specific fluorine-containing polymer includes a method of polymerizing the above monomers in the presence of a chain transfer agent and a radical polymerization initiator.

Examples of the chain transfer agent include: chain transfer agents having at least one of an iodine atom and a bromine atom; chain or cyclic alkanes such as methane, ethane, propane, butane, pentane, hexane, and cyclohexane; alcohols such as methanol, ethanol, and propanol; and mercaptans such as tert-dodecyl mercaptan, n-dodecyl mercaptan, and n-octadecyl mercaptan. Among them, a chain transfer agent having at least one of an iodine atom and a bromine atom is preferable in terms of crosslinking reactivity of the specific fluorine-containing polymer.

The chain transfer agent may be used alone, and may be used in combination of two or more thereof.

Specific examples of the chain transfer agent having at least one of an iodine atom and a bromine atom include: compounds represented by I-Rf6-I, wherein Rf6 represents a perfluoroalkylene group having 1 to 8 carbon atoms or a perfluorooxyalkylene group having 2 to 8 carbon atoms; compounds represented by I-Rf7-Br, wherein Rf7 represents a perfluoroalkylene group having 1 to 8 carbon atoms or a perfluorooxyalkylene group having 2 to 8 carbon atoms; and compounds represented by I-R1-I, wherein R1 represents an alkylene group having 1 to 8 carbon atoms or an oxyalkylene group having 2 to 8 carbon atoms.

Specific examples of I-Rf6-I include diiododifluoromethane, 1,2-diiodoperfloroethane, 1,3-diiodoperfluoropropane, 1,4-diiodoperfluorobutane, 1,5-diiodoperfluoropentane, 1,6-diiodoperfluorohexane, 1,7-diiodoperfluoroheptane, and 1,8-diiodoperfluorooctane. Among them, 1,4-diiodoperfluorobutane and 1,6-diiodoperfluorohexane are preferable, and 1,4-diiodoperfluorobutane is particularly preferable.

Specific examples of I-Rf7-Br include 1-iodo-4-bromoperfluorobutane, 1-iodo-6-bromoperfluorohexane, and 1-iodo-8-bromoperfluorooctane. Among them, 1-iodo-4-bromoperfluorobutane and 1-iodo-6-bromoperfluorohexane are preferable, and 1-iodo-4-bromoperfluorobutane is particularly preferable.

Specific examples of I-R1-I include 1,2-diiodoethane, 1,3-diiodopropane, 1,4-diiodobutane, 1,5-diiodopentane, 1,6-diiodohexne, and 1,8-diiodooctane.

Polymerizing the above monomers in the presence of these chain transfer agents having at least one of an iodine atom and a bromine atom can introduce the iodine atom and/or the bromine atom into the fluorine-containing polymer.

When the chain transfer agent having at least one of an iodine atom and a bromine atom is used, the preparation amount thereof is preferably 0.05 to 5 parts by mass, more preferably 0.10 to 0.8 parts by mass, and particularly preferably 0.15 to 0.50 parts by mass, relative to 100 parts by mass of the total preparation amount of the monomers used for the polymerization of the specific fluorine-containing polymer. When the preparation amount is 0.05 parts by mass or more, the polymerization time can be shortened, and thereby the storage elastic modulus G' of the specific fluorine-containing polymer is easily regulated at the above value. When the preparation amount is 5 parts by mass or less, the coat has good rubber physical properties.

The polymerization temperature is appropriately selected depending on the monomer composition, a decomposition temperature of the radical polymerization initiator, and the like. The polymerization temperature is preferably 0 to 60°C, more preferably 10 to 50°C, and particularly preferably 20 to 40°C.

About details of components other than the above used in the production of the specific fluorine-containing polymer and the producing method, a method described in paragraphs 0033 to 0053 in WO 2017/057512 can be referred to.

<Solvent>

The solvent is used for dissolving or dispersing the specific fluorine-containing polymer.

The solvent is a non-fluorine-based organic solvent. The non-fluorine-based organic solvent is a solvent having no fluorine atom. The non-fluorine-based organic solvent is used in terms of further excellent productivity of the coated article.

The organic solvent may be used alone, and may be used in combination of two or more thereof.

Examples of the non-fluorine-based organic solvent include non-fluorine alkanes, non-fluorine ketone solvents, non-fluorine ether solvents, non-fluorine ester solvents, non-fluorine alcohol solvents, and non-fluorine amide solvents.

Specific examples of the non-fluorine alkanes include hexane, heptane, and cyclohexane.

Specific examples of the non-fluorine ketone solvents include acetone, methyl ethyl ketone, and methyl isobutyl ketone.

Specific examples of the non-fluorine ether solvents include diethyl ether, tetrahydrofuran (hereinafter, also referred to as "THF"), and tetraethylene glycol dimethyl ether.

Specific examples of the non-fluorine ester solvents include ethyl acetate and butyl acetate. Specific examples of the non-fluorine alcohol solvents include isopropyl alcohol, ethanol, and n-butanol.

Examples of the non-fluorine amide solvents include N,N-dimethylformamide (hereinafter, also referred to as "DMF").

Among the above solvents, the non-fluorine ester solvents and the non-fluorine ether solvents are preferable, the non-fluorine ether solvents are preferable, and THF is particularly preferable, in terms of further excellent effect of the present invention.

A boiling point of the solvent in the present invention is preferably 30°C to 200°C, more preferably 40°C to 170°C, and particularly preferably 50°C to 160°C, in terms of easiness of solvent removal and productivity.

An SP value of the solvent is preferably 10 to 25 $(J/cm^3)^{1/2}$, more preferably 13 to 23 $(J/cm^3)^{1/2}$, and particularly preferably 15 to 20 $(J/cm^3)^{1/2}$.

A ratio of the SP value of the solvent to the SP value of the specific fluorine-containing polymer (the SP value of the solvent / the SP value of the specific fluorine-containing polymer) is preferably 0.80 to 1.30, more preferably 0.85 to 1.20, and particularly preferably 0.90 to 1.10. When the SP value ratio is within the above range, the solubility of the specific fluorine-containing polymer in the solvent is improved, and thereby mixing and generating air bubbles in the coat and mottling on the coat can be further inhibited.

A content of the solvent is 30 mass% or more, and preferably 35 mass% or more, relative to the total mass of the present coating material. When the content of the solvent is 30 mass% or more, the solubility or dispersibility of the specific fluorine-containing polymer in the present coating material is improved, and thereby mixing and generating air bubbles in the coat and mottling on the coat can be further inhibited.

The content of the solvent is 98 mass% or less, and preferably 95 mass% or less, relative to the total mass of the present coating material. The content of the solvent being 98 mass% or less, that is, a solvent amount to volatilize during the production of the crosslinked rubber coated article being not exceedingly large can further inhibit mixing and generating air bubbles in the coat.

<Crosslinking agent>

The present coating material preferably comprises a crosslinking agent. The crosslinking agent is used for crosslinking the specific fluorine-containing polymer. Specific examples of the crosslinking agent include organic peroxides, polyols, and amines, and preferably organic peroxides in terms of excellent productivity, heat resistance, and chemical resistance of the coated article.

Specific examples of the organic peroxides include dialkyl peroxides, $\alpha,\alpha'$-bis(tert-butylperoxy)-p-diisopropyl-benzene, $\alpha,\alpha'$-bis(tert-butylperoxy)-m-diisopropylbenzene, benzoyl peroxide, tert-butylperoxybenzene, 2,5-dimethyl-2,5-di(benzoylperoxy)hexane, tert-butyl cumyl peroxide, and dicumyl peroxide.

Specific examples of the dialkyl peroxides include 1,1-di(tert-butylperoxy)-3,3,5-trimethylcyclohexane, 2,5-dimethylhexane-2,5-dihydroxy peroxide, 2,5-dimethyl-2,5-di(tert-butylperoxy)hexane, 2,5-dimethyl-2,5-di(tert-butylperoxy)-3-hexyne, tert-butylperoxymaleic acids, and tert-butylperoxy propyl carbonate.

The crosslinking agent may be used alone, and may be used in combination of two or more thereof.

When the crosslinking agent is contained, the content is preferably 0.3 to 10 parts by mass, more preferably 0.3 to 5 parts by mass, and particularly preferably 0.5 to 3 parts by mass, relative to 100 parts by mass of the specific fluorine-containing polymer.

When the crosslinking agent is contained, the content is preferably 0.1 to 5 mass%, more preferably 0.3 to 3 mass%, and particularly preferably 0.5 to 2 mass%, relative to the total mass of the present coating material.

<Polymerization Inhibitor>

The present coating material preferably comprises a polymerization inhibitor. This polymerization inhibitor can inhibit a reaction at the crosslinking portion of the fluorine-containing polymer (the iodine atom and/or the bromine atom) in the present coating material during storage of the present coating material. As a result, the solubility or dispersibility of the fluorine-containing polymer in the solvent is further improved, and thereby mottling on the coat can be further inhibited to obtain further uniform coat.

Examples of the polymerization inhibitor include dibutylhydroxytoluene, hydroquinone, and diphenylamine, and dibutylhydroxytoluene is particularly preferable in terms of the above effect to be further excellent.

The polymerization inhibitor may be used alone, and may be used in combination of two or more thereof.

A content of the polymerization inhibitor is preferably 0.001 to 0.08 parts by mass, more preferably 0.003 to 0.06 parts by mass, and particularly preferably 0.008 to 0.04 parts by mass, relative to 100 parts by mass of the solvent in terms of the above effect to be further excellent.

A content of the polymerization inhibitor is preferably 0.001 to 0.08 mass%, more preferably 0.003 to 0.06 mass%, and particularly preferably 0.008 to 0.04 mass%, relative to the total mass of the present coating material in terms of the above effect to be further excellent.

<Other Components>

The present coating material may comprise components other than the above within a range not impairing the effect of the present invention. Examples of the other components include crosslinking auxiliaries (for example, triallylcyanurate, triallylisocyanurate, and trimethallylisocyanurate), acid acceptors (for example, fatty acid esters, fatty acid metal salts, and oxides of divalent metals (such as magnesium oxide, calcium oxide, zinc oxide, and lead oxide)), fillers and reinforcing agents (for example, carbon black, barium sulfate, calcium metasilicate, calcium carbonate, titanium oxide, silicon dioxide, clay, and talc), scorch retarders (for example, phenolic hydroxy group-containing compounds such as bisphenol A, quinones such as hydroquinone, and $\alpha$-methylstyrene dimers such as 2,4-di(3-isopropylphenyl)-4-methyl-1-pentene), crown ethers (for example, 18-crown-6), and mold releasing agents (for example, sodium stearate).

When the present coating material comprises the other components, a total content of the other components is preferably more than 0.1 part by mass and 30 parts by mass or less, more preferably 1 to 15 parts by mass, and particularly preferably 3 to 5 parts by mass, relative to 100 parts by mass of the specific fluorine-containing polymer.

A method for preparing the present coating material includes a method of mixing and stirring the above components, and is not particularly limited. A temperature during the mixing and stirring is preferably equal to or higher than the glass transition point of the specific fluorine-containing polymer and lower than the boiling point of the solvent in terms of dispersibility of the specific fluorine-containing polymer.

The term "during the mixing and stirring" means a time from mixing of the components constituting the present coating material to end of the stirring.

The method for preparing the present coating material is preferably: mixing and stirring the specific fluorine-containing polymer and the solvent; and then leaving to stand the mixed liquid containing the specific fluorine-containing polymer and the solvent for 1 day or longer, more preferably 3 days or longer. Leaving to stand for 3 days or longer after the mixing and stirring further facilitates the specific fluorine-containing polymer to be dissolved in the solvent.

The term of leaving to stand at room temperature after the mixing and stirring is not particularly limited as long as the components constituting the present coating material are not deteriorated or volatilize, and can be, for example, within 7 days. A temperature during the leaving to stand of the mixed liquid is preferably lower than the boiling point of the used solvent in terms of the mixed liquid not being deteriorated and the solvent hardly volatilizing. The mixed liquid may be left to stand at a room temperature (approximately 15 to 30°C). Within the above temperature range, the specific fluorine-containing polymer can be sufficiently dissolved in the solvent.

[Coated Article and Producing Method]

An aspect of the coated article of the present invention (hereinafter, also referred to as "the coated article of the first embodiment") includes an aspect comprising: a substrate; and a coat obtained by solidifying the present coating material formed on the substrate (solidified coat).

The coated article of the first embodiment can be produced as follows, for example. That is, an aspect of a method for producing the coated article of the present invention (hereinafter, also referred to as "the method for producing the coated article of the first embodiment") includes a method for producing a coated article comprising: coating the present coating material on a substrate; and forming a solidified coat by drying the coating material.

An aspect of the coated article of the present invention (hereinafter, also referred to as "the coated article of the second embodiment") includes an aspect comprising: a substrate; and a coat obtained by curing the present coating material formed on the substrate (cured coat).

The coated article of the second embodiment can be produced as follows, for example. That is, an aspect of a method for producing the coated article of the present invention (hereinafter, also referred to as "the method for producing the coated article of the second embodiment") includes a method for producing a coated article comprising: coating the present coating material on a substrate; drying the coating material; and subsequently crosslinking the fluorine-containing polymer in the coating material by heating or irradiating radiation to form the cured coat.

Among the coated article of the first embodiment and the coated article of the second embodiment, the coated article of the second embodiment is preferable in terms of excellent hardness of the coat.

In the method for producing the coated article of the second embodiment, heating the fluorine-containing polymer to crosslinking can simultaneously achieve the drying of the coating material and crosslinking of the fluorine-containing polymer. However, preferably, the coating material is dried to form the solidified coat, and then crosslinking the fluorine-containing polymer by heating or irradiating radiation, in terms of further inhibiting air bubble generation.

Examples of a method for coating the present coating material include a spray-coating method, a squeegee-coating method, a flow-coating method, a bar-coating method, a spin-coating method, a dip-coating method, a screen-printing method, a gravure-printing method, a die-coating method, an inkjet method, a curtain-coating method, and a method using a brush or a spatula. The coating method may be multicolor molding (such as bicolor molding).

Examples of a method for drying after coating the present coating material include a method of heating at 20 to 150°C for 1 minute to 72 hours.

Examples of a heating method include heat-pressing, steam, and hot air.

When the present coating material comprises the crosslinking agent, the temperature during the drying is necessarily lower than a reaction temperature of the crosslinking agent in order to dry the coating material without crosslinking the fluorine-containing polymer in the present coating material.

Examples of a method for crosslinking the specific fluorine-containing polymer in the present coating material include a method of crosslinking by heating and a method of crosslinking by irradiating radiation, and the method of crosslinking by heating is preferable. Specific examples of the radiation to be irradiated include electron beam and ultraviolet ray.

Specific examples of the crosslinking method by heating include heat-pressing crosslinking, steam crosslinking, and hot-air crosslinking. The method is appropriately selected from these methods with considering the usage of the present coating material and the like. The crosslinking can stabilize or improve mechanical characteristics, compressive permanent set, and other characteristics of the coat.

A heating condition during the crosslinking is preferably 80 to 350°C for 30 minutes to 48 hours. During the heating, the temperature may be increased and decreased stepwise.

Specific examples of a material of the substrate include inorganic materials, organic materials, and organic-inorganic composite material.

Specific examples of the inorganic materials include concrete, fieldstone, metal (a material containing a metal such as, for example, stainless steel such as SUS303 and SUS304, iron, aluminum, zinc, tin, titanium, lead, copper, magnesium, manganese, silicon, chromium, zirconium, vanadium, nickel, and bismuth), glass, and carbon.

Specific examples of the organic materials include resins, polymer materials such as rubber, adhesives, and wood.

Specific examples of the resins include: thermosetting resins such as an epoxy resin, PPE, an unsaturated polyester resin, a phenolic resin, a silicone resin, an amino resin, a urethane resin, an acrylic resin, a urea resin, an allyl resin, a diallylphthalate resin, a melamine resin, a bismaleimide resin, a polyimide resin, a cyanate resin, and benzoxadine; thermoplastic resins such as polyaryl ether ketone resins such as PEEK, PEK, and PEKK, polyamide resins such as polyamides 6, 66, 612, 12, 6T, and 9T, and PAI, polyolefin resins such as polyethylene and polypropylene, hydrocarbon resins such as an AS resin, ABS, PET, PVA, and PVDC, and engineering plastic resins such as POM, PC, PBT, PPS, PEI, PSF, PPSF, and PES; and fluorine-containing resins such as PVDF, PTFE, FEP, PFA, ETFE, ECTFE, and PCTFE.

As the thermosetting resins, an epoxy resin, a polyester resin, and a polyimide resin are preferable, and a polyimide resin is most preferable in terms of excellent adhesiveness to, particularly, the coating material.

Specific examples of the rubber include: fluorine-based rubbers such as FEPM, FKM, and FFKM; acrylic rubbers such as ACM and AEM; silicone rubbers; halogen-containing hydrocarbon-based rubbers such as CSM, CO, ECO, CR, CPE, CIIR, and chloroprene; diene-based rubbers such as NR, EPDM, EPM, BR, IIR, IR, NBR, and SBR; polyamide-based thermoplastic rubbers; styrene-based thermoplastic rubbers; and fluorine-based thermoplastic rubbers.

Specific examples of the organic-inorganic composite materials include fiber-reinforced plastics, resin-reinforced concretes, and fiber-reinforced concretes.

A shape of the substrate is not particularly limited, and a shape suitable for the usage can be used. Specific examples of the substrate shape include plate, sphere, fiber, cloth (for example, woven, knit, braiding, and non-woven fabric), and tube. Here, the braiding means a cloth material obtained by arranging fibers in a grid pattern without weaving nor knitting.

The substrate may be subjected to known surface treatments. Examples of the surface treatment include a metal-coating treatment and a chemical treatment. Examples of the metal-coating treatment include electroplating, hot dipping, and evaporation plating. Examples of the chemical treatment include a chromate treatment and a phosphate-salt treatment.

A plurality of the above substrates may be used. That is, the coated article of the present invention may be a layer-coated article comprising a coat composed of the present coating material, and comprising two or more substrates of the above inorganic materials, organic materials, or organic-inorganic composite material.

[Usage]

A usage of the present coating material is not particularly limited. The present coating material is usable for coating each substrate (for example, a metal and a resin) used in the semiconductor industry, the electronics industry, the automobile industry, the chemical industry, and the like, for example. The present coating material is also suitably usable for coating gaskets, metal gaskets, and O-rings, and in addition, for coating articles described in paragraph 0099 of WO 2016/017801.

Examples of the semiconductor industry-related usage include casing of electronic members and ECUs, potting and potting wires for power semiconductor modules, sealing agents for LED devices, die bond materials for fixing chips, dam materials and sealing materials for COB. The present coating material is also suitable for potting materials, coating materials, and sealing materials for IGBT modules and PCBs.

Examples of the usage further include various resist inks such as etching resist inks, solder resist inks, plating resist inks, and marking inks.

Furthermore, the present coating material is also suitably used for heat dissipation coating materials and sealing material such as heat dissipation greases by adding, for example, a thermally conductive filler described in paragraph 0042 of JP 2009-108424 A into the coating material of the present invention.

In addition, the present coating material is also used for coating electric wire conductors, coating insulating layers, and coating glass-braided electric wires. The present coating material is further used for coating printed boards such as CCLs in the electronics industry and stretchable or flexible substrates for wearable devices. The present coating material is also usable for coating piezoelectric sensors and actuators in the soft-robotics field.

Here, a method for producing a glass-braided electric wire coated with the present coating material is not particularly limited, and examples thereof include a method of knitting glass fibers coated with the present coating material into a tube shape and a method of coating knitted glass fibers into a tube shape with the present coating material.

The present coating material is also usable for impregnation materials or binders for inorganic fibers and organic fibers. Specific examples of the inorganic fibers include CFRP, CFRTP, glass fibers, GFRP, and GFRTP. Specific examples of the organic fibers include polymer fibers such as aramid fibers and ester fibers, and examples of such polymer fibers include fibrous materials obtained by melt-spinning engineering plastics.

The present coating material is also usable for adhesive tapes or films. The coat obtained from the present coating material may be used as adhesive tapes or film as it is, and a coated article obtained by applying the present coating material on a substrate may be used as adhesive tapes or film.

When the coat obtained from the present coating material is used as an adhesive tape or film as it is, a coat obtained by applying the present coating material on a substrate is peeled to use as the adhesive tapes or film, for example.

When the coated article obtained by applying the present coating material on a substrate is used as an adhesive tape or film, the coat obtained from the present coating material functions as, for example, a sticking layer, an adhesive layer, or a protecting layer.

Examples of the electronics industry use include tapes for fixing a lead frame, tapes for fixing FPC such as an LED-mounted board, bonding sheets, tapes for resin-sealing and molding a package board such as QFN and SON, TAB tapes, and COF tapes.

Examples of the insulative material include electrically insulative glass cloth, coating for magnet wires, insulative joint tapes for electrical facilities, insulative self-fused tapes, and insulative paper.

Examples of optical members include optical films for an LCD and an LED, light-shielding and reflecting tapes, protecting sheets for a solar cell, films for a touch panel and electronic paper, sticking films for a PDP front filter, sticking films for an EMI shield.

As the tapes for electronic materials, tapes in which a polyimide is used as the substrate and the present coating material is applied thereon are particularly suitably used. The coat obtained from the present coating material preferably functions as an adhesive layer or a sticking layer. With the coat obtained from the present coating material that functions as an adhesive layer or a sticking layer, resins such as acrylic resins and epoxy resins may be blended.

The present coating material, which is also suitably usable for various usages in the medical field, is usable as a coating material for instruments such as a catheter and for devices such as a microchannel chip described in WO 2019/054500.

As food usage, the present coating material is also used for gaskets used for a beverage container, a dispenser, and the like, sealing materials such as an O-ring, conveyor belts for foods, and the like.

The usage also include sealing materials and lining materials used for piping of various chemical plants, coating materials for a storage tank, an interior wall of a reaction vessel, or an agitator.

The present coating material is also used for coating for: a charging roller of a printer, a digital-color multifunctional machine, and the like; a developing roller; a fixing roller or a transfer roller; and rollers for rolling, cooling, and acid-washing steps for producing steel and glass.

The present coating material is also used for coating for anti-tip coating for automobiles, railway vehicles, and aircrafts.

The present coating material is also used for fenders (marine civil engineering and marine vessels), impregnated fibrous or non-woven fabric protective clothing and the like, sealing materials for a foundation, rubber gloves, stators or rotors of uniaxial eccentric screw pumps, and usage described in paragraph 0175 in WO 2015/099051.

With applying the present coating material for the above usages, the present coating material may be used as it is, and a tape or film obtained from the present coating material may be used.

Examples

Hereinafter, the present invention will be described in detail with examples. The following examples 1 to 11 and 15 to 20 are Examples, and examples 12 to 14 are Comparative Examples. The present invention is not limited to these examples. A blend amount of each component in Table, described later, is referred to be a mass basis unless otherwise mentioned.

[Measurement of Fluorine-Containing Polymer Composition]

Contents of a TFE unit and a VdF unit (mol%) in a fluorine-containing polymer were calculated by $^{19}$F-nuclear magnetic resonance (NMR) analysis. A content of a propylene unit in the fluorine-containing polymer was calculated by $^1$H- and $^{13}$C-nuclear magnetic resonance (NMR) analysis.

A C3DVE unit in the fluorine-containing polymer was calculated as follows. A latex after polymerization was aggregated to recover the fluorine-containing polymer. A filtrate after the recovery and a filtrate remained after washing the latex were filtered with a disc filter, and the obtained liquid was analyzed with an ion chromatograph (apparatus in which automatic sample combustion apparatus for pretreatment apparatus for ion chromatography, AQF-100 type, manufactured by Daia Instruments Co., Ltd., and an ion chromatograph are combined).

When a fluoride ion at 3 mass% or more relative to an amount of C3DVE added into a reactor (preparation amount of C3DVE) was detected, the content of the C3DVE unit (mol%) was calculated by estimating polymerization of C3DVE at an amount in which an amount of C3DVE in a liquid calculated based on the measurement result with the ion chromatography was subtracted from the preparation amount of C3DVE.

When a fluoride ion at 3 mass% or more relative to the preparation amount of C3DVE was not detected, the content of the C3DVE unit (mol%) was calculated by estimating all C3DVE used for preparation being polymerized.

A content of the iodine atom in the polymer was measured with the above ion chromatograph.

[Storage Elastic Modulus G' of Fluorine-Containing Polymer]

By using a rubber processing analysis apparatus (RPA-2000, manufactured by Alpha Technologies), a value measured in accordance with ASTM D5289 and ASTM D6204, and under conditions of temperature: 100°C, amplitude: 0.5°, vibration frequency: 50/min, was specified as a storage elastic modulus G' of the fluorine-containing polymer. Table 1 and Table 2 show the results.

[Weight-Average Molecular Weight (Mw) of Fluorine-Containing Polymer]

GPC measurement was performed by using HLC-8220GPC, manufactured by Tosoh Corporation, to calculate a weight-average molecular weight (Mw) of the fluorine-containing polymer as a molecular weight conversion value with polymethyl methacrylate, which was a reference standard. Table 1 and Table 2 show the results.

Detail of the GPC measurement condition was as follows.

Column: one column of TSK guardcolumn MP(XL) (6 mm in inner diameter, 4 cm in length, manufactured by Tosoh Corporation) and two columns of TSKgel MultiporeHXL-M (7.8 mm in inner diameter, 30 cm in length, manufactured by Tosoh Corporation) being connected in series.
Measurement sample: a tetrahydrofuran solution at a concentration of 1.0 to 1.5 mass%, 50 $\mu$L.
Eluent: tetrahydrofuran, 1 ml/min.
Temperatures in column and at inlet: 40°C.
Detection: differential refractive index detector, detected with negative polarity.

[Crosslinking Rate of Fluorine-Containing Polymer]

First, a composition A in which no solvent was added was prepared in a coating material in each example, described later.

Then, a crosslinking test of crosslinking the fluorine-containing polymer in the composition A under conditions at 160°C for 12 minutes by using a rubber processing analysis apparatus (RPA-2000, manufactured by Alpha Technologies), was performed. In this time, $T_{10}$ and $T_{90}$ where $T_{10}$ is a time required for a torque of the composition A to reach 10% of a maximum torque, and $T_{90}$ is a time required for the torque of the composition A to reach 90% of the maximum torque, from the beginning of the test as the base point, were determined.

Based on the obtained values, a crosslinking rate of the fluorine-containing polymer was determined by the following formula (A). Table 1 and Table 2 show the results.

$$\text{Crosslinking rate} = 100 \times [1/(T_{90} \cdot T_{10})] \quad \text{Formula (A)}$$

[SP Value of Fluorine-Containing Polymer]

An SP value of the fluorine-containing polymer was calculated by the Fedros method (see Literature: R. F. Fedros, Polym. Eng. Sci., 14 [2] 147 (1974)).

[Total Light Transmittance of Coating Material]

In production of a coating material in each example, described later, a total light transmittance was measured by: preparing a mixed liquid obtained by mixing and stirring a total amount of the fluorine-containing polymer contained in the coating material and a total amount of the solvent contained in the coating material; leaving to stand the mixed liquid at a room temperature (23°C) for 3 days; stirring the mixed liquid again; and leaving to stand the mixed liquid at a room temperature (23°C) for 30 minutes. The total light transmittance was measured in accordance with JIS K 7105, and by using a color-haze simultaneous measurement apparatus (COH 400, manufactured by NIPPON DENSHOKU INDUSTRIES CO., LTD.). Table 1 and Table 2 show the results.

Note that the "stirring" was performed by using a rotating/revolving mixer (Awatori Rentaro "ARE-310", manufactured by THINKY CORPORATION) under conditions of 15 minutes at number of rotation of 2000 rpm. The total mass of the sample was 80 g.

[Glass Transition Temperature (Tg) of Fluorine-Containing Polymer]

A glass transition temperature (Tg) was measured under conditions of: using DSC Q-100, manufactured by TA Instruments; heating the polymer at a heating rate of 10 °C/min from -40°C to 135°C; cooling the polymer at a cooling rate of 20 °C/min to -40°C; and heating the polymer again at a heating rate of 10 °C/min to 135°C. A temperature at an inflection point in the obtained DSC curve was specified as Tg.

[Presence/Absence of Air Bubbles]

A surface of a coat was visually observed to check the presence/absence of air bubbles on the surface of the coat. Table 1 and Table 2 show the results.

[Uniformity of Coat]

The surface of the coat was visually observed to evaluate uniformity of the coat based on the following criteria. Table 1 and Table 2 show the results. No mottle on the coat indicates excellent uniformity of the coat.

  A: No mottle was observed on the coat.
  B: Mottle was observed on the coat.

[Hardness]

A hardness of the coat was determined by a method in accordance with JIS K 5600-5-4:1999 (pencil method) to evaluate the hardness based on the following criteria. Table 1 and Table 2 show the results.

  A: No scratch, indentation, nor peeling of the coat was observed when a pencil having a hardness of 6H or harder was used.
  B: A scratch, indentation, or peeling of the coat occurred when a pencil having a hardness of 6H or 5H was used.
  C: A scratch, indentation, or peeling of the coat occurred when a pencil having a hardness of 4H or 3H was used.

D: A scratch, indentation, or peeling of the coat occurred when a pencil having a hardness of softer than 3H was used.

Hardness of A, B, or C indicates excellent hardness.

[Adhesiveness]

A test was performed in accordance with JIS K 5400-8-5 (Adhesiveness, 100-grid test) to evaluate adhesiveness of the coat based on the following criteria. Table 4 shows the results.

Good: A number of coat grids not removed from a substrate was 80 or more of 100.
Fair: A number of coat grids not removed from a substrate was 50 or more and less than 80 of 100.
Poor: A number of coat grids not removed from a substrate was less than 50 of 100.

[Impact Resistance]

A test was performed in accordance with JIS K 5600-5-3 (falling-weight test) to evaluate impact resistance of the coat based on the following criteria. Table 4 shows the results.

Good: No cracking occurred on the coat.
Poor: Cracking occurred on the coat.

[Production of Fluorine-Containing Polymer 1-1]

Example 1 described in WO 2009/119202 was used as a reference. So that the storage elastic modulus G' was 258 kPa, a polymerization temperature was 25°C, a preparation amount of a chain transfer agent (1,4-diiodoperfluorobutane) was 0.22 parts by mass relative to 100 parts by mass of a total preparation amount of monomers used for polymerization of a fluorine-containing polymer 1-1 to obtain the fluorine-containing polymer 1-1.
A content of each unit (molar ratio) in the fluorine-containing polymer 1-1 was TFE unit / propylene unit = 56/44. A content of the iodine atom in the fluorine-containing polymer 1-1 was 0.4 mass%. Tg was -3°C.

[Production of Fluorine-Containing Polymer 1-2]

A fluorine-containing polymer 1-2 was obtained in the same manner as the production of the fluorine-containing polymer 1-1 except that, so that the storage elastic modulus G' was 214 kPa, a preparation amount of the chain transfer agent (1,4-diiodoperfluorobutane) was 0.20 parts by mass relative to 100 parts by mass of a total preparation amount of monomers used for polymerization of the fluorine-containing polymer 1-2.
A content of each unit (molar ratio) in the fluorine-containing polymer 1-2 was TFE unit / propylene unit = 56/44. A content of the iodine atom in the fluorine-containing polymer 1-2 was 0.4 mass%. Tg was -3°C.

[Production of Fluorine-Containing Polymer 2-1]

Example 5 described in WO 2017/057512 was used as a reference. So that the storage elastic modulus G' was 268 kPa, a polymerization temperature was 25°C, a preparation amount of a chain transfer agent (1,4-diiodoperfluorobutane) was 0.43 parts by mass relative to 100 parts by mass of a total preparation amount of monomers used for polymerization of a fluorine-containing polymer 2-1 to obtain the fluorine-containing polymer 2-1.
A content of each unit (molar ratio) in the fluorine-containing polymer 2-1 was TFE unit / propylene unit / C3DVE unit = 56/43.8/0.2. A content of the iodine atom in the fluorine-containing polymer 2-1 was 0.5 mass%. Tg was -3°C.

[Production of Fluorine-Containing Polymer 2-2]

A fluorine-containing polymer 2-2 was obtained in the same manner as the production of the fluorine-containing polymer 2-1 except that, so that the storage elastic modulus G' was 360 kPa, a preparation amount of the chain transfer agent (1,4-diiodoperfluorobutane) was 0.31 parts by mass relative to 100 parts by mass of a total preparation amount of monomers used for polymerization of the fluorine-containing polymer 2-2.
A content of each unit (molar ratio) in the fluorine-containing polymer 2-2 was TFE unit / propylene unit / C3DVE unit = 56/43.8/0.2. A content of the iodine atom in the fluorine-containing polymer 2-2 was 0.5 mass%. Tg was -3°C.

[Production of Fluorine-Containing Polymer 3-1]

AFLAS 200P (product name, manufactured by AGC Inc.) was used as a fluorine-containing polymer 3-1. The fluorine-containing polymer 3-1 is a polymer having a TFE unit, a propylene unit, and a VdF unit, and having no iodine atom nor bromine atom. The fluorine-containing polymer 3-1 has more than 0.1 mol% of the VdF unit relative to all the unit of the fluorine-containing polymer 3-1. Tg of the fluorine-containing polymer 3-1 was -13°C.

[Examples 1 to 14]

Coating materials of examples 1 to 14 were obtained by preparing components at blending amounts shown in Table 1, and stirring the preparation at a room temperature (23°C) for 10 minutes to be left to stand for 3 days.
The obtained coating material was coated on an aluminum substrate (JIS H 4000:2006 A5052) by using a bar coater, the coat was heated to dry at 70°C for 1 hour by using an oven, and then heated in vacuo at 200°C for 1 hour. A cured coat on the aluminum substrate surface was formed by the above procedure to obtain a coated article comprising the cured coat. The coating condition of the coating material was appropriately regulated to produce a coated article comprising a cured coat having a thickness of each of 10 μm and 50 μm.
Each component described in Tables, except for the fluorine-containing polymer, is summarized as follows.

TAIC: product name, manufactured by Mitsubishi Chemical Corporation, triallylisocyanate, a crosslinking co-agent.
Perkadox 14: product name, manufactured by KAYAKU AKZO CO., LTD., $\alpha,\alpha'$-bis(tert-butylperoxy)-p-diisopropylbenzene, a crosslinking agent (an organic peroxide).
PERHEXA 25B: product name, manufactured by NOF CORPORATION, 2,5-dimethyl-2,5-di(tert-butylperoxy)hexane, a crosslinking agent (an organic peroxide).
MgO: magnesium oxide, an acid acceptor.
Butyl acetate: a solvent, SP value: 17.4, boiling point: 126°C.
THF: tetrahydrofuran, a solvent, SP value: 19.4, boiling point: 66°C.
DMF: N,N-dimethylformamide, a solvent, SP value: 24.7, boiling point: 153°C.
Dibutylhydroxytoluene: a polymerization inhibitor.

By using the obtained fluorine-containing polymers, coating materials, and coated articles, measurement of each of the above various physical properties and evaluation test were performed. Table 1 shows the results.

[Table 1]

| | | Unit | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|---|
| Summary of used components | **Fluorine-containing polymer** — Type | | 1-1 | 1-1 | 1-1 | 1-1 | 1-1 | 1-1 | 1-2 | 1-2 | 1-2 | 2-1 | 2-1 | 1-1 | 3-1 | 2-2 |
| | Presence/absence of iodine atom or bromine atom | | Presence | Presence | Presence | Presence | Presence | Presence | Presence | Presence | Presence | Presence | Presence | Presence | Absence | Presence |
| | Storage elastic modulus G' (kPa) | | 258 | 258 | 258 | 258 | 258 | 258 | 214 | 214 | 214 | 268 | 268 | 258 | 220 | 360 |
| | Mw | | 270,000 | 270,000 | 270,000 | 270,000 | 270,000 | 270,000 | 250,000 | 250,000 | 250,000 | - | - | 270,000 | - | - |
| | Crosslinking rate | | 23 | 21 | 19 | 18 | 20 | 19 | 19 | 19 | 19 | 23 | 20 | 17 | 8 | 21 |
| | SP VALUE $(J/cm^3)^{1/2}$ | | 18.1 | 18.1 | 18.1 | 18.1 | 18.1 | 18.1 | 18.1 | 18.1 | 18.1 | 18.1 | 18.1 | 18.1 | 18.1 | 18.1 |
| | **Solvent** — Type | | Butyl acetate | Butyl acetate | Butyl acetate | Butyl acetate | Butyl acetate | Butyl acetate | THF | THF | THF | THF | Butyl acetate | DMF | Butyl acetate | THF |
| | SP VALUE $(J/cm^3)^{1/2}$ | | 17.4 | 17.4 | 17.4 | 17.4 | 17.4 | 17.4 | 19.4 | 19.4 | 19.4 | 19.4 | 17.4 | 24.7 | 17.4 | 19.4 |
| Formulation of coating material | Fluorine-containing polymer | parts by mass | 100 | 100 | 100 | 100 | 100 | 100 | 100 | 100 | 100 | 100 | 100 | 100 | 100 | 100 |
| | TAIC | parts by mass | 5 | 5 | 1 | 2.5 | 5 | 2.5 | 2.5 | 2.5 | 2.5 | 2.5 | 2.5 | 5 | 5 | 5 |
| | Perkadox 14 | parts by mass | 1 | 1 | 1 | 0 | 1 | 1 | 1 | 1 | 1 | 1 | 1 | 1 | 1 | 1 |
| | PERHEXA 25B | parts by mass | 0 | 0 | 0 | 1 | 0 | 0 | 0 | 0 | 0 | 0 | 0 | 0 | 0 | 0 |
| | MgO | parts by mass | 0 | 1 | 0 | 0 | 0 | 0 | 0 | 0 | 0 | 0 | 0 | 0 | 0 | 0 |
| | Solvent | parts by mass | 400 | 400 | 400 | 400 | 400 | 900 | 67 | 900 | 400 | 900 | 900 | 400 | 400 | 400 |
| | Dibutylhydroxytoluene | parts by mass | 0.08 | 0.08 | 0.08 | 0.08 | 0.00 | 0.18 | 0.02 | 0.27 | 0.08 | 0.27 | 0.18 | 0.12 | 0.12 | 0.12 |
| Blend ratio | Fluorine-containing polymer / Coating material | mass% | 20 | 20 | 20 | 20 | 20 | 10 | 59 | 10 | 20 | 10 | 10 | 20 | 20 | 20 |
| | Solvent / Coating material | mass% | 79 | 79 | 80 | 79 | 79 | 90 | 39 | 90 | 79 | 90 | 90 | 79 | 79 | 79 |
| | Dibutylhydroxytoluene / Solvent | mass% | 0.02 | 0.02 | 0.02 | 0.02 | - | 0.02 | 0.03 | 0.03 | 0.02 | 0.03 | 0.02 | 0.03 | 0.03 | 0.03 |

(continued)

|  |  |  | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|---|
| Total light transmittance of mixed liquid |  | % | 39 | 39 | 34 | 35 | 33 | 47 | 4 | 81 | 81 | 67 | 37 | 0.6 | - | - |
| SP value of solvent / SP value of fluorine-containing polymer |  |  | 0.96 | 0.96 | 0.96 | 0.96 | 0.96 | 0.96 | 1.07 | 1.07 | 1.07 | 1.07 | 0.96 | 1.36 | 0.96 | 1.07 |
| Evaluation results | Thickness of coat at 10 μm | Air bubbles | Absence | Absence | Absence | Absence | Absence | Absence | Absence | Absence | Absence | Absence | Absence | Presence | Presence | Presence |
|  |  | Uniformity of coat | A | A | A | A | A | A | A | A | A | A | A | B | B | B |
|  |  | Hardness | C | C | C | C | C | C | A | A | A | B | C | D | D | D |
|  | Thickness of coat at 50 μm | Air bubbles | Absence | Absence | Absence | Absence | Absence | Absence | Absence | Absence | Absence | Absence | Absence | Presence | Presence | Presence |
|  |  | Uniformity of coat | A | A | A | A | B | A | A | A | A | A | A | - | - | - |

As shown in Table 1, it has been confirmed that the coat having excellent hardness is obtained when the coating material comprising the specific fluorine-containing polymer having a storage elastic modulus G' of less than 360 kPa and the solvent is used (examples 1 to 11). The total light transmittance of the mixed liquid is 1.0% or more, the mixed liquid being obtained by mixing and stirring the specific fluorine-containing polymer and the solvent, leaving to stand for 3 days, and stirred again for 30 minutes to measure the total light transmittance.

[Examples 15 to 20]

Coating materials of examples 15 to 20 were obtained by preparing components at blending amounts shown in Table 2, and stirring the preparation at a room temperature (23°C) for 10 minutes to be left to stand for 3 days.

A coated article comprising a coat having each of thickness of 10 μm and 50 μm was produced in the same manner as in examples 1 to 14 except that the coating materials of examples 15 to 20 were used. Cured coats were obtained when the coating materials of examples 15, 16, and 19 were used. Solidified coats were obtained when the coating materials of examples 17, 18, and 20 were used.

Each component described in Table 2, except for the components used in the above examples 1 to 14, is summarized as follows.

Perkadox GB-50L: product name, manufactured by KAYAKU NOURYON CORPORATION, benzoyl peroxide, a crosslinking agent (an organic peroxide).

NYPER BMT K40: product name, manufactured by NOF CORPORATION, benzoyl peroxide, a crosslinking agent (an organic peroxide).

By using the obtained fluorine-containing polymers, coating materials, and coated articles, measurement of each of the above various physical properties and evaluation test were performed. Table 2 shows the results.

[Table 2]

| | | | Example 15 | Example 16 | Example 17 | Example 18 | Example 19 | Example 20 |
|---|---|---|---|---|---|---|---|---|
| Summary of used components | Fluorine-containing polymer | Type | 1-2 | 1-2 | 1-2 | 1-2 | 1-2 | 2-1 |
| | | Presence/absence of iodine atom or bromine atom | Presence | Presence | Presence | Presence | Presence | Presence |
| | | Storage elastic modulus G' | 214 | 214 | 214 | 214 | 214 | 268 |
| | | Mw | 250,000 | 250,000 | 250,000 | 250,000 | 250,000 | - |
| | | Crosslinking rate | 19 | 19 | 19 | - | - | - |
| | | SP VALUE $(J/cm^3)^{1/2}$ | 18.1 | 18.1 | 18.1 | 18.1 | 18.1 | 18.1 |
| | Solvent | Type | THF | THF | THF | THF | THF | THF |
| | | SP VALUE $(J/cm^3)^{1/2}$ | 19.4 | 19.4 | 19.4 | 19.4 | 19.4 | 19.4 |
| Formulation of coating material | Fluorine-containing polymer | parts by mass | 100 | 100 | 100 | 100 | 100 | 100 |
| | TAIC | parts by mass | 5 | 5 | 0 | 0 | 5 | 0 |
| | PERHEXA 25B | parts by mass | 0 | 0 | 0 | 0 | 1.5 | 0 |
| | Perkadox GB-50L | parts by mass | 3 | 0 | 0 | 0 | 0 | 0 |
| | NYPER BMT K40 | parts by mass | 0 | 3 | 0 | 0 | 0 | 0 |
| | Solvent | parts by mass | 233 | 233 | 233 | 400 | 400 | 1900 |
| | Dibutylhydroxytoluene | parts by mass | 0.05 | 0.05 | 0.05 | 0.08 | 0.08 | 0.38 |
| Blend ratio | Fluorine-containing polymer / Coating material | mass% | 29 | 29 | 30 | 20 | 20 | 5 |
| | Solvent / Coating material | mass% | 68 | 68 | 70 | 80 | 79 | 95 |
| | Dibutylhydroxytoluene / Solvent | mass% | 0.02 | 0.02 | 0.02 | 0.02 | 0.02 | 0.02 |
| Total light transmittance of mixed liquid | | % | 73 | 73 | 73 | 81 | 81 | 83 |
| SP value of solvent / SP value of fluorine-containing polymer | | | 1.07 | 1.07 | 1.07 | 1.07 | 1.07 | 1.07 |

| Evaluation re-sults | | | Example 15 | Example 16 | Example 17 | Example 18 | Example 19 | Example 20 |
|---|---|---|---|---|---|---|---|---|
| Evaluation re-sults | Thickness of coat at 10 μm | Air bubbles | Absence | Absence | Absence | - | - | - |
| | | Uniformity of coat | A | A | A | - | - | - |
| | | Hardness | A | A | C | C | A | C |
| | Thickness of coat at 50 μm | Air bubbles | Absence | Absence | Absence | - | - | - |
| | | Uniformity of coat | A | A | A | - | - | - |

As shown in Table 2, it has been confirmed that the coat having excellent hardness is obtained when the coating material comprising the specific fluorine-containing polymer having a storage elastic modulus G' of less than 360 kPa and the solvent is used (examples 15 to 20). The total light transmittance of the mixed liquid is 1.0% or more, the mixed liquid being obtained by mixing and stirring the specific fluorine-containing polymer and the solvent, leaving to stand for 3 days, and stirred again for 30 minutes to measure the total light transmittance.

By using the coating materials of the above examples 1, 9, 12, and 17, and substrates described in Table 3, samples for evaluation were produced with the following procedure. By using the obtained samples for evaluation, at least one evaluation test of adhesiveness and impact resistance was performed. Table 4 shows the results.

Specifically, the obtained coating material was coated on a substrate described in Table 3 by using a bar coater, the coat was left to stand at a room temperature for 1 day to dry the solvent, and then the coating material on the substrate was heated under a heating condition set for each substrate type. A cured coat on the substrate surface was formed by the above procedure to obtain the sample for evaluation in which the coat (50 μm in thickness) was formed on the substrate. Cured coats were obtained when the coating materials of examples 1, 9, and 12 were used. A solidified coat was obtained when the coating materials of example 17 was used.

[Table 3]

| Type of used substrate | Heating condition |
|---|---|
| Aluminum plate (JIS H 4000:2006 A5052) | heat-drying at 70°C for 1 hour by using oven, then heating in vacuo at 200°C for 1 hour |
| Glass plate | heat-drying at 70°C for 1 hour by using oven, then heating in vacuo at 200°C for 1 hour |
| Polyimide film (UPILEX-S 125S, manufactured by Ube Industries, Ltd.) | heat-drying at 70°C for 1 hour by using oven, then heating in vacuo at 200°C for 1 hour |
| EpoxyG (laminated plate of glass fiber and epoxy resin) | heat-drying at 170°C for 1 hour by using oven |
| CFRP (epoxy resin-impregnated CFRP plate) | heat-drying at 170°C for 1 hour by using oven |
| Cu1 (JIS H3100:2018 C1100P) | heat-drying at 170°C for 1 hour by using oven |
| Cu2 (JIS H3100:2018 C1020P) | heat-drying at 170°C for 1 hour by using oven |
| SPCC (JIS G3141:2017 cold-rolled steel plate) | heat-drying at 170°C for 1 hour by using oven |
| SUS301 (JIS G4305:2015 cold-rolled stainless steel plate) | heat-drying at 170°C for 1 hour by using oven |
| SUS304 (JIS G4305:2015 cold-rolled stainless steel plate) | heat-drying at 170°C for 1 hour by using oven |
| NBR (acrylonitrile-butadiene copolymer) | heat-drying at 130°C for 15 hours by using oven |
| IIR (butyl-based rubber) | heat-drying at 120°C for 15 hours by using oven |
| CSM (chlorosulfonated polyethylene rubber) | heat-drying at 160°C for 1 hours by using oven |
| PEEK (polyaryl ether ketone-based resin) | heat-drying at 200°C for 1 hour by using oven |
| Fluorine-based rubber | heat-drying at 170°C for 1 hour by using oven |

Here, the substrate composed of the fluorine-based rubber was produced by using a copolymer B1, described in WO 2019/070039. Specifically, the following components were kneaded at a room temperature for 10 minutes with two rollers to obtain a uniformly mixed crosslinkable composition. The obtained crosslinkable composition was heat-pressed at 170°C for 20 minutes (primary crosslinking) to obtain a crosslinked rubber sheet with a size of 150 mm × 80 mm × 2 mm in thickness. Thereafter, a secondary crosslinking was performed in an oven at 200°C for 4 hours, and the sheet was left to stand at a room temperature overnight to form the fluorine-based rubber substrate.

(Composition of Crosslinkable Composition)

- Copolymer B1: 100 parts by mass

- MT carbon (reinforcing material): 30.0 parts by mass

- The above TAIC (crosslinking co-agent): 5.0 parts by mass

- The above Perkadox 14 (crosslinking agent): 1.5 parts by mass

- Calcium stearate (acid acceptor): 1.0 part by mass

[Table 4]

| Type of coating material used | Type of used substrate | Evaluation results | |
| --- | --- | --- | --- |
| | | Adhesiveness | Impact resistance |
| Example 1 | Aluminum plate | good | good |
| | Glass plate | good | - |
| | Polyimide film (UPILEX-S 125S, manufactured by Ube Industries, Ltd.) | good | - |
| Example 9 | Aluminum plate | good | good |
| | Glass plate | good | - |
| | Polyimide film (UPILEX-S 125S, manufactured by Ube Industries, Ltd.) | good | - |
| | EpoxyG | good | - |
| | CFRP | good | - |
| | Cu1 | good | - |
| | Cu2 | good | - |
| | SPCC | good | - |
| | SUS301 | good | - |
| | SUS304 | good | - |
| | NBR | good | - |
| | IIR | good | - |
| | CSM | good | - |
| | PEEK | good | - |
| | Fluorine-based rubber | good | - |
| Example 12 | Aluminum plate | poor | - |
| | Glass plate | poor | - |
| | Polyimide film (UPILEX-S 125S, manufactured by Ube Industries, Ltd.) | poor | - |

(continued)

| Type of coating material used | Type of used substrate | Evaluation results | |
|---|---|---|---|
| | | Adhesiveness | Impact resistance |
| Example 17 | Aluminum plate | good | - |
| | Glass plate | good | - |
| | Polyimide film (UPILEX-S 125S, manufactured by Ube Industries, Ltd.) | good | - |
| | EpoxyG | good | - |
| | CFRP | good | - |
| | Cu1 | good | - |
| | Cu2 | good | - |
| | SPCC | good | - |
| | SUS-303 | good | - |
| | SUS-304 | good | - |
| | NBR | good | - |
| | IIR | good | - |
| | CSM | good | - |
| | PEEK | good | - |
| | Fluorine-based rubber | good | - |

As shown in Table 4, it has been confirmed that the coat having excellent adhesiveness and impact resistance is obtained when the coating material comprising the specific fluorine-containing polymer having a storage elastic modulus G' of less than 360 kPa and the solvent is used. The total light transmittance of the mixed liquid is 1.0% or more, the mixed liquid being obtained by mixing and stirring the specific fluorine-containing polymer and the solvent, leaving to stand for 3 days, and stirred again for 30 minutes to measure the total light transmittance.

By using the above coating materials of examples 18 to 20, samples for evaluation were produced with the following procedure to perform an insulability evaluation test.

First, a glass fiber texture (thickness: 0.24 mm, basis amount of fiber: 450 $g/m^2$) was cut to a size of 150 mm $\times$ 150 mm, and impregnated with the coating material of each of examples 18 to 20 by brush coating.

Then, the glass fiber texture impregnated with the coating material of example 18 or example 20 was heat-treated under the air atmosphere at 170°C for 1 hour. The glass fiber texture impregnated with the coating material of example 19 was heat-treated under a nitrogen atmosphere at 170°C for 1 hour. A solidified or cured coat was formed on the glass fiber surface constituting the texture by the above procedure. Vf (fiber volume fraction) of the dried/cured composite fiber was regulated to 80 to 90%.

Thereafter, the glass fiber texture on which the coat was formed was cut to a size of 75 mm in length $\times$ 75 mm in width $\times$ 0.24 mm in thickness to form the sample for evaluation.

Vf (fiber volume fraction) is calculated by the following formula.

Vf (%) = 100 $\times$ (volume of glass fiber texture) / (volume of glass fiber texture on which coat is formed)

By using the obtained sample for insulability evaluation, a volume resistivity ($\Omega \cdot cm$) was measured in accordance with the standard ASTM D257. Table 5 shows the results.

[Table 5]

| | | | Example 18 | Example 19 | Example 20 |
|---|---|---|---|---|---|
| Evaluation results | Insulability evaluation volume resistivity | $\Omega \cdot cm$ | $1 \times 10^{15}$ | $1 \times 10^{15}$ | $9 \times 10^{14}$ |

As shown in Table 5, it has been confirmed that using the coating materials of examples 18 to 20 can form the glass fiber texture having a high volume resistivity and excellent insulability.

## Claims

1. A coating material, comprising:

   a fluorine-containing polymer having at least one of an iodine atom and a bromine atom; and
   a solvent, wherein
   a storage elastic modulus G' of the fluorine-containing polymer is 200 kPa or more and less than 360 kPa,
   a total light transmittance of a mixed liquid obtained by mixing and stirring the fluorine-containing polymer and the solvent is 1.0% or more, the mixed liquid being left to stand for 3 days, stirred again, and left to stand for 30 minutes to measure the total light transmittance,
   a weight-average molecular weight (Mw) of the fluorine-containing polymer is 240,000 to 280,000,
   the solvent is a non-fluorine-based organic solvent, and
   a content of the solvent is 30 mass% or more and 98 mass% or less, relative to the total mass of the present coating material.

2. The coating material according to Claim 1, further comprising a crosslinking agent.

3. The coating material according to Claim 1 or 2, further comprising a polymerization inhibitor.

4. The coating material according to any one of Claims 1 to 3, wherein the storage elastic modulus G' of the fluorine-containing polymer is 250 kPa or less.

5. The coating material according to any one of Claims 1 to 4, wherein the fluorine-containing polymer has a unit based on tetrafluoroethylene and a unit based on propylene.

6. The coating material according to Claim 5, wherein the fluorine-containing polymer further has a unit based on a monomer having two or more polymerizable unsaturated bonds.

7. The coating material according to Claim 5 or 6, wherein the fluorine-containing polymer has substantially no unit based on vinylidene fluoride.

8. A method for producing the coating material according to any one of Claims 1 to 7, the method comprising mixing and stirring the fluorine-containing polymer and the coating material under a temperature condition equal to or higher than a glass transition temperature of the fluorine-containing polymer and equal to or lower than a boiling point of the solvent.

9. A method for producing a coated article comprising a substrate and a solidified coat formed on the substrate, the method comprising:

   coating the coating material according to any one of Claims 1 to 7 on the substrate; and
   forming the solidified coat by drying the coating material.

10. A method for producing a coated article comprising a substrate and a cured coat formed on the substrate, the method comprising:

    coating the coating material according to any one of Claims 1 to 7 on the substrate;
    drying the coating material; and
    subsequently crosslinking the fluorine-containing polymer in the coating material by heating or irradiating radiation to form the cured coat.

11. A coated article, comprising:

    a substrate; and
    a coat formed on the substrate and obtained by solidifying or curing the coating material according to any one of Claims 1 to 7.

12. The coated article according to Claim 11, wherein the substrate comprising at least one material selected from the group consisting of a metal, a glass, a carbon, a resin, and a rubber.

13. The coated article according to Claim 12, wherein the substrate comprises a polyimide resin.

14. The coated article according to Claim 12, wherein the substrate is a glass fiber; or a texture, knit, braiding, or non-woven fabric of the glass fiber.

**Patentansprüche**

1. Beschichtungsmaterial, umfassend:

ein Fluor-haltiges Polymer, das mindestens eines von einem Iodatom und einem Bromatom aufweist; und
ein Lösungsmittel, wobei
ein Speicherelastizitätsmodul G' des Fluor-haltigen Polymers 200 kPa oder mehr und weniger als 360 kPa beträgt,
eine Gesamtlichtdurchlässigkeit einer durch Mischen und Rühren des Fluor-haltigen Polymers und des Lösungsmittels erhaltenen Mischflüssigkeit 1,0 % oder mehr beträgt, wobei die Mischflüssigkeit 3 Tage stehen gelassen, erneut gerührt und 30 Minuten stehen gelassen wird, um die Gesamtlichtdurchlässigkeit zu messen,
ein Gewichtsmittel des Molekulargewichts (Mw) des Fluor-haltigen Polymers 240000 bis 280000 beträgt,
das Lösungsmittel ein nicht-fluorbasiertes organisches Lösungsmittel ist, und
ein Gehalt des Lösungsmittels 30 Massen-% oder mehr und 98 Massen-% oder weniger bezogen auf die Gesamtmasse des Beschichtungsmaterials beträgt.

2. Beschichtungsmaterial nach Anspruch 1, weiter umfassend ein Vernetzungsmittel.

3. Beschichtungsmaterial nach Anspruch 1 oder 2, weiter umfassend einen Polymerisationsinhibitor.

4. Beschichtungsmaterial nach einem der Ansprüche 1 bis 3, wobei das Speicherelastizitätsmodul G' des Fluor-haltigen Polymers 250 kPa oder weniger beträgt.

5. Beschichtungsmaterial nach einem der Ansprüche 1 bis 4, wobei das Fluor-haltige Polymer eine Einheit auf Basis von Tetrafluorethylen und eine Einheit auf Basis von Propylen aufweist.

6. Beschichtungsmaterial nach Anspruch 5, wobei das Fluor-haltige Polymer weiter eine Einheit auf Basis eines Monomers mit zwei oder mehr polymerisierbaren ungesättigten Bindungen aufweist.

7. Beschichtungsmaterial nach Anspruch 5 oder 6, wobei das Fluor-haltige Polymer im Wesentlichen keine Einheit auf Basis von Vinylidenfluorid aufweist.

8. Verfahren zur Herstellung des Beschichtungsmaterials nach einem der Ansprüche 1 bis 7, umfassend das Mischen und Rühren des Fluor-haltigen Polymers und des Lösungsmittels unter einer Temperaturbedingung, die gleich oder höher als eine Glasübergangstemperatur des Fluor-haltigen Polymers und gleich oder niedriger als der Siedepunkt des Lösungsmittels ist.

9. Verfahren zur Herstellung eines beschichteten Artikels, umfassend ein Substrat und eine auf dem Substrat gebildete verfestigte Beschichtung, wobei das Verfahren umfasst:

das Beschichten des Beschichtungsmaterials nach einem der Ansprüche 1 bis 7 auf dem Substrat; und
das Bilden der verfestigten Beschichtung durch Trocknen des Beschichtungsmaterials.

10. Verfahren zur Herstellung eines beschichteten Artikels, umfassend ein Substrat und eine auf dem Substrat gebildete gehärtete Beschichtung, wobei das Verfahren umfasst:

das Beschichten des Beschichtungsmaterials nach einem der Ansprüche 1 bis 7 auf dem Substrat;

das Trocknen des Beschichtungsmaterials; und

anschließend das Vernetzen des Fluor-haltigen Polymers im Beschichtungsmaterial durch Erwärmen oder Bestrahlen mit Strahlung, um die gehärtete Beschichtung zu bilden.

11. Beschichteter Artikel, umfassend: ein Substrat; und
eine auf dem Substrat gebildete Beschichtung, die durch Verfestigen oder Härten des Beschichtungsmaterials nach einem der Ansprüche 1 bis 7 erhalten wurde.

12. Beschichteter Artikel nach Anspruch 11, wobei das Substrat mindestens ein Material, ausgewählt aus der Gruppe, bestehend aus einem Metall, einem Glas, einem Kohlenstoff, einem Harz und einem Gummi, umfasst.

13. Beschichteter Artikel nach Anspruch 12, wobei das Substrat ein Polyimidharz umfasst.

14. Beschichteter Artikel nach Anspruch 12, wobei das Substrat eine Glasfaser; oder ein Gewebe, Gestrick, Geflecht oder Vlies der Glasfaser ist.

**Revendications**

1. Matériau d'enrobage, comprenant :

un polymère contenant du fluor ayant au moins un d'un atome d'iode et d'un atome de brome ; et
un solvant, dans lequel
un module élastique de stockage G' du polymère contenant du fluor est de 200 kPa ou plus et moins de 360 kPa,
une transmittance lumineuse totale d'un liquide mélangé obtenu en mélangeant et agitant le polymère contenant du fluor et le solvant est de 1,0 % ou plus, le liquide mélangé étant laissé au repos pendant 3 jours, agité de nouveau et laissé au repos pendant 30 minutes pour mesurer la transmittance lumineuse totale,
un poids moléculaire moyen en poids (Mw) du polymère contenant du fluor est de 240 000 à 280 000,
le solvant est un solvant organique à base d'un composé autre que le fluor, et une teneur en le solvant est de 30 % en masse ou plus et 98 % en masse ou moins, par rapport à la masse totale du matériau d'enrobage présent.

2. Matériau d'enrobage selon la revendication 1, comprenant en outre un agent de réticulation.

3. Matériau d'enrobage selon la revendication 1 ou 2, comprenant en outre un inhibiteur de polymérisation.

4. Matériau d'enrobage selon l'une quelconque des revendications 1 à 3, dans lequel le module élastique de stockage G' du polymère contenant du fluor est de 250 kPa ou moins.

5. Matériau d'enrobage selon l'une quelconque des revendications 1 à 4, dans lequel le polymère contenant du fluor a une unité à base de tétrafluoroéthylène et une unité à base de propylène.

6. Matériau d'enrobage selon la revendication 5, dans lequel le polymère contenant du fluor a une unité à base d'un monomère ayant deux liaisons insaturées polymérisables ou plus.

7. Matériau d'enrobage selon la revendication 5 ou 6, dans lequel le polymère contenant du fluor n'a essentiellement aucune unité à base de fluorure de vinylidène.

8. Procédé de production du matériau d'enrobage selon l'une quelconque des revendications 1 à 7, le procédé comprenant mélanger et agiter le polymère contenant du fluor et le matériau d'enrobage à une condition de température supérieure ou égale à une température de transition vitreuse du polymère contenant du fluor et inférieure ou égale à un point d'ébullition du solvant.

9. Procédé de production d'un article enrobé comprenant un substrat et un enrobage solidifié formé sur le substrat, le procédé comprenant :

enrober le matériau d'enrobage selon l'une quelconque des revendications 1 à 7 sur le substrat ; et
former l'enrobage solidifié en séchant le matériau d'enrobage.

**10.** Procédé de production d'un article enrobé comprenant un substrat et un enrobage durci formé sur le substrat, le procédé comprenant :

enrober le matériau d'enrobage selon l'une quelconque des revendications 1 à 7 sur le substrat ;
sécher le matériau d'enrobage ; et
réticuler ensuite le polymère contenant du fluor dans le matériau d'enrobage en chauffant ou irradiant un rayonnement pour former l'enrobage durci.

**11.** Article enrobé, comprenant :

un substrat ; et
un enrobage formé sur le substrat et obtenu en solidifiant ou durcissant le matériau d'enrobage selon l'une quelconque des revendications 1 à 7.

**12.** Article enrobé selon la revendication 11, dans lequel le substrat comprenant au moins un matériau sélectionné parmi le groupe constitué d'un métal, d'un verre, d'un carbone, d'une résine et d'un caoutchouc.

**13.** Article enrobé selon la revendication 12, dans lequel le substrat comprend une résine de polyimide.

**14.** Article enrobé selon la revendication 12, dans lequel le substrat est une fibre de verre ; ou un tissu à texture, tricoté, tressé ou non tissé de la fibre de verre.

**REFERENCES CITED IN THE DESCRIPTION**

**Patent documents cited in the description**

- JP 7034026 A
- WO 2019239288 A1
- EP 1093485 A1
- WO 2019126016 A1
- JP 2002012813 A
- JP 2002256204 A
- WO 2017057512 A
- WO 2016017801 A
- JP 2009108424 A
- WO 2019054500 A
- WO 2015099051 A
- WO 2009119202 A
- WO 2019070039 A

**Non-patent literature cited in the description**

- **R. F. FEDROS**. *Polym. Eng. Sci.*, 1974, vol. 14 (2), 147